(19) Europäisches Patentamt
European Patent Office
Office européen des brevets

(11) **EP 2 301 403 B1**

(12) **EUROPÄISCHE PATENTSCHRIFT**

(45) Veröffentlichungstag und Bekanntmachung des Hinweises auf die Patenterteilung:
**27.01.2016 Patentblatt 2016/04**

(51) Int Cl.:
*A47L 9/14* *(2006.01)*   *B01D 39/16* *(2006.01)*

(21) Anmeldenummer: **10007640.5**

(22) Anmeldetag: **22.07.2010**

(54) **Staubfilterbeutel**

Dust filter bag

Sac de filtre à poussière

(84) Benannte Vertragsstaaten:
**BE DE IT PL SE**

(30) Priorität: **29.09.2009   DE 102009043295**

(43) Veröffentlichungstag der Anmeldung:
**30.03.2011   Patentblatt 2011/13**

(73) Patentinhaber: **Sandler AG**
**95126 Schwarzenbach/Saale (DE)**

(72) Erfinder:
• **Die Erfinder haben auf ihre Nennung verzichtet.**

(56) Entgegenhaltungen:
**EP-A1- 1 878 482     EP-A1- 1 917 895**

EP 2 301 403 B1

**Beschreibung**

Die vorliegende Erfindung betrifft verbesserte Staubsaugerfilterbeutel, welche eine Oberlage und eine Unterlage, jeweils aus mehrschichtigen Filtermaterialien umfassen. Diese Filtermaterialien bestehen aus mindestens einer Grobfilterlage, mindestens einer Feinfilterlage und mindestens einer Stützlage. Die einzelnen Lagen sind an definierten Stellen miteinander verbunden.

Aus dem Stand der Technik sind synthetische, mehrlagige Filteraufbauten sowie deren Verwendung zur Herstellung von Staubsaugerfilterbeuteln bekannt. DE 102 21 694 A1 beschreibt einen mehrlagigen Filteraufbau und die Verwendung eines mehrlagigen Filteraufbaus zur Entstaubung von Fluiden. Der Faserdurchmesser der aus Vliesstoffen bestehenden Filtermedien nimmt von der Anström- zur Abströmseite kontinuierlich ab und die Faserdurchmesserverteilung innerhalb der Grobstaubfilterlage und der Feinstaubfilterlage weist einen Gradienten auf. Trotz guter Staubaufnahmeleistungen weisen solch geartete Staubsaugerfilterbeutel die nachteilige Eigenschaft auf, dass sie aufgrund ihrer rein aus organisch chemischen Polymeren bestehenden synthetischen Materialzusammensetzung nicht biologisch abbaubar und nur unter erhöhten Aufwand recyclierbar sind und somit eine Belastung für die Umwelt darstellen.

DE 10 2006 051 117 B3 offenbart Staubfilterbeutel für Staubsauger bei welchen die Beutelwandlagen aus Papier, ausgewählt aus Packpapier, Kraftpapier oder Kraftpapier mit Kunststoffeintrag, gefertigt sind.

Sind die Beutelwandlagen aus bloßem Papier zusammengesetzt, sind die daraus hergestellten Staubfilterbeutel zwar biologisch abbaubar, jedoch neigen solche Staubfilterbeutel bei Einwirkung von Feuchtigkeit verhältnismäßig leicht zum Aufplatzen, da die Nassfestigkeit von Papier deutlich geringer ist, als dessen Trockenfestigkeit. Des Weiteren sind Staubfilterbeutel aus Papier sehr steif, was ein Einpassen und Anpassen an den im Gehäuse vorgesehenen Staubsammelraum schwierig macht. In der Folge wird durch schlecht eingepasste Beutel das Innenvolumen des Beutels nicht voll ausgenutzt, der Beutel ist schneller mit Staub aufgefüllt, was zu einem Mehrverbrauch an Beuteln führt.

Die EP 1917895 B1 beschreibt Staubfilterbeutel, bei welchen Teile der einzelnen Filterlagen biologisch abbaubare Faserstoffe enthalten bzw. aus Papier gebildet. Aufgrund der Tatsache, dass nicht alle Lagen biologisch abbaubar sind und auch durch den Zusatz von explizit antibakteriell wirkenden Substanzen auf Basis von Bambus oder Chitosan, ist keine vollständige biologische Abbaubarkeit gegeben, durch die antibakteriell wirkenden Substanzen sogar gefährdet.

Aufgabe der Erfindung ist es einen Staubfilterbeutel der eingangs erwähnten Art zu schaffen, der eine verbesserte Umweltbilanz aufweist. Die Lösung geschieht anhand der Merkmale des Anspruches 1. Weiterbildungen der Erfindung sind in den Unteransprüchen dargestellt.

Der erfindungsgemäße Staubfilterbeutel zeichnet sich dadurch aus, dass das Filtermaterial aus biologisch abbaubaren Fasern und / oder Filamenten besteht. Dadurch ist gewährleistet, dass der Staubfilterbeutel nach Gebrauch kompostiert werden kann. Durch die Verwendung von Ausgangsmaterialien auf Basis nachwachsender Rohstoffe haben erfindungsgemäße Staubfilterbeutel auch eine verbesserte Umweltbilanz.

Biologisch Abbaubar im Sinne der Erfindung bedeutet einen Festigkeitsverlust von größer gleich 40% an einem Messstreifen wenn dieser in Anlehnung an die Bedingungen aus ASTM 5338-98 (re-approved 2003) behandelt wurde. Dazu werden aus der Oberlage (2) und der Unterlage (3) eines erfindungsgemäßen Staubfilterbeutels (1) je zwölf 50mm breite und 250mm lange Streifen gestanzt. Sechs dieser Streifen werden abgedunkelt bei Raumtemperatur aufbewahrt. Die anderen sechs Streifen werden in Anlehnung an die Bedingungen in ASTM 5338-98 behandelt. Abweichend zu der Beschreibung in ASTM 5338-98 wird an den Mustern nur die Kompostier-Behandlung im Rundhalskolben durchgeführt. Es erfolgt keine Bestimmung der Kohlendioxidentwicklung, anderer flüchtiger Bestandteile oder des Gewichtsverlustes über die Behandlungszeit. In einen Rundhalskolben werden jeweils vier Messstreifen der Größe 50*250mm mit ca. 600gr aufgelockertem Kompost und mit ca. 300ml enthärtetem Wasser vermischt. Der Rundhalskolben wird verschlossen und bei 58 °C in einem Trockenschrank 180 Tage lang gelagert. Täglich einmal sind die Kolben zu öffnen um Faulgase entweichen zu lassen, einmal wöchentlich sind die Kolben zu schütteln.

Nach Ablauf der Behandlungszeit werden die Streifen entnommen. Abschließend wird die Festigkeit der behandelten Streifen und der unbehandelten Streifen bestimmt. Dies geschieht mittels einer Universalprüfmaschine, Typ Zwick 1425, wobei die Einspannlänge auf 200mm gesetzt ist, die Vorkraft 0,1N und die Abzugsgeschwindigkeit 100mm/min beträgt. Bestimmt wird die Festigkeit als maximale Kraft Fmax im Messweg.

Der Festigkeitsverlust FV in % wird ermittelt nach der Formel:

$$FV = \frac{(\text{Mittelwert Fmax der unbehandelten Streifen}) - (\text{Mittelwert Fmax der behandelten Streifen})}{\text{Mittelwert Fmax der unbehandelten Streifen}} * 100\%$$

Des Weiteren werden für erfindungsgemäße Staubfilterbeutel 1 nur Materialien eingesetzt, die auf nachwachsenden Rohstoffen basieren. Verwendung finden daher bevorzugt Fasern und / oder Filamente aus natürlichen Polymeren, wobei hauptsächlich Cellulose oder Stärke als Ausgangsstoffe verwendet werden.

Für cellulosische Fasern wie beispielsweise Viskosefasern dient Zellstoff als Grundmaterial, welcher aus dem Holz von beispielsweise Buchen, Fichten oder Pinien gewonnen wird. Nach erfolgter Holzaufbereitung und Zellstofferzeugung findet die Herstellung von Viskosefasern nach dem Nassspinnverfahren statt, d.h., die gelöste Spinnmasse wird mittels Spinnpumpenkraft durch ein Chemikalienbad transportiert und durch eine Spinndüse gepresst. Die aus den Bohrungen der Spinndüse austretenden Filamente werden anschließend abgezogen und verstreckt. Derartige Fasern sind biologisch abbaubar und weisen keine thermoplastischen Eigenschaften auf.

In bevorzugten Ausführungsformen kommen darüber hinaus Fasern und / oder Filamente aus biologisch abbaubaren, thermoplastischen Polymeren zur Anwendung. Diese auf Stärke basierenden Fasern und / oder Filamente werden mittels Extrusionsverfahren aus Granulaten, beispielsweise auf Basis von Polylactiden (=Polymilchsäuren, im nachfolgenden PMS bezeichnet), hergestellt. Als Ausgangsmaterial dienen landwirtschaftliche Ressourcen: Aus Mais wird zuerst Stärke, dann Traubenzucker gewonnen. Durch Fermentierung entsteht daraus Milchsäure. Die grundlegenden Prozesse sind beispielsweise in der "Fasertabelle nach P.-A. Koch, Polylactidfasern", 1.Ausgabe 2004, Institut für Textiltechnik der RWTH Aachen beschrieben.

Fasern und Granulate auf Basis von PMS sind aus vielen, chemisch aneinander gebundenen Milchsäuremolekülen aufgebaut und weisen thermoplastische Eigenschaften auf. Aus so hergestellten Granulaten können mittels Extrusionsverfahren faser- oder fadengeformte Vliesstoffe, aber auch Fasern zur Vliesbildung nach Trockenverfahren hergestellt werden.

Ein bevorzugtes Ausführungsbeispiel des erfindungsgemäßen Staubfilterbeutels wird im Folgenden näher beschrieben.

In den Figuren sind gezeigt:

Figur 1: eine schematische Draufsicht auf eine bevorzugte Ausführung des erfindungsgemäßen Staubfilterbeutels.

Figur 2: zeigt einen Querschnitt durch den Staubfilterbeutel aus Figur 1 entlang der Schnittlinie A-A'.

Figur3: zeigt einen Querschnitt durch eine der Filtermateriallagen 5 aus Figur 2 entlang der Schnittlinie B-B'.

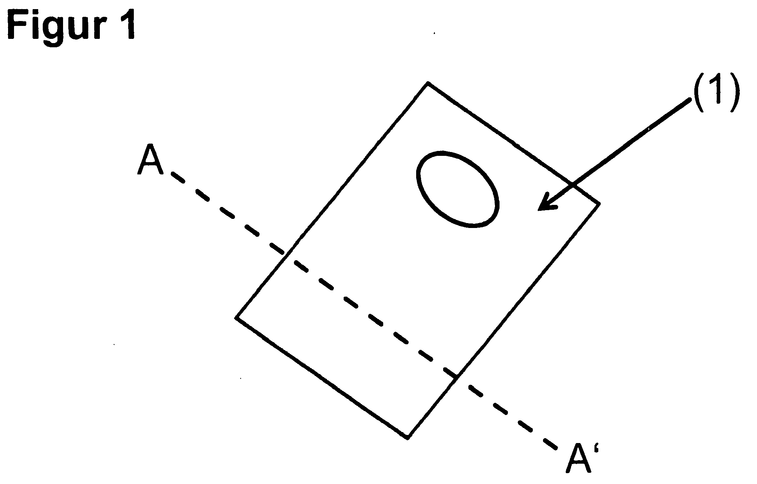

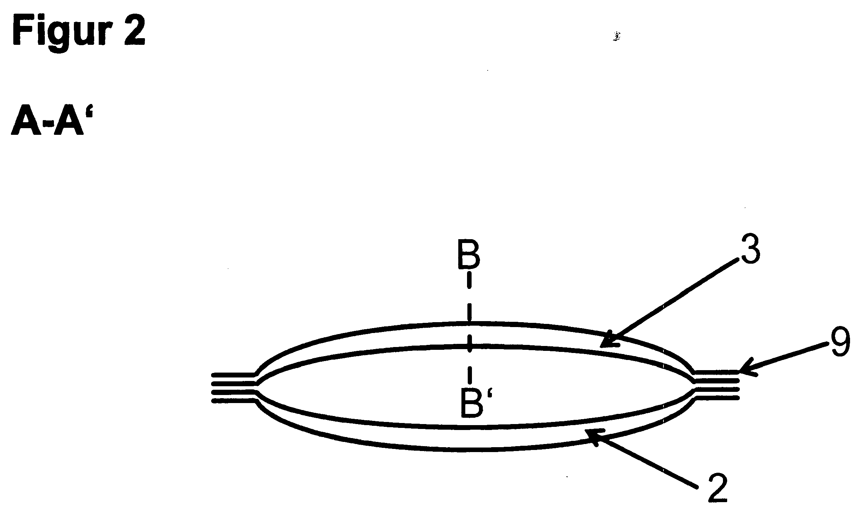

Ein erfindungsgemäßer Staubfilterbeutel 1 wird gemäß den Figuren 1 bis 3 beispielsweise aus einer Oberlage 2 und einer Unterlage 3 gebildet, die jeweils mit der Anströmseite 4 aufeinander gelegt werden und an den Konturen 9 des späteren Beutels miteinander beispielsweise thermisch verschweißt werden.

Es ist auch möglich nur eine Lage zu verwenden, wobei diese so zu falten ist, dass die Anströmseite 4 dieser Lage aufeinander zu liegen kommt und die so entstandene Form an den noch offenen Rändern zur Bildung des erfindungsgemäßen Staubfilterbeutels 1 beispielsweise verschweißt wird.

Des Weiteren enthält ein erfindungsgemäßer Staubfilterbeutel eine Staubeinlassöffnung und, sofern notwendig, ein biologisch abbaubares Anschlussstück zur Verbindung mit der Staubreinigungsanlage.

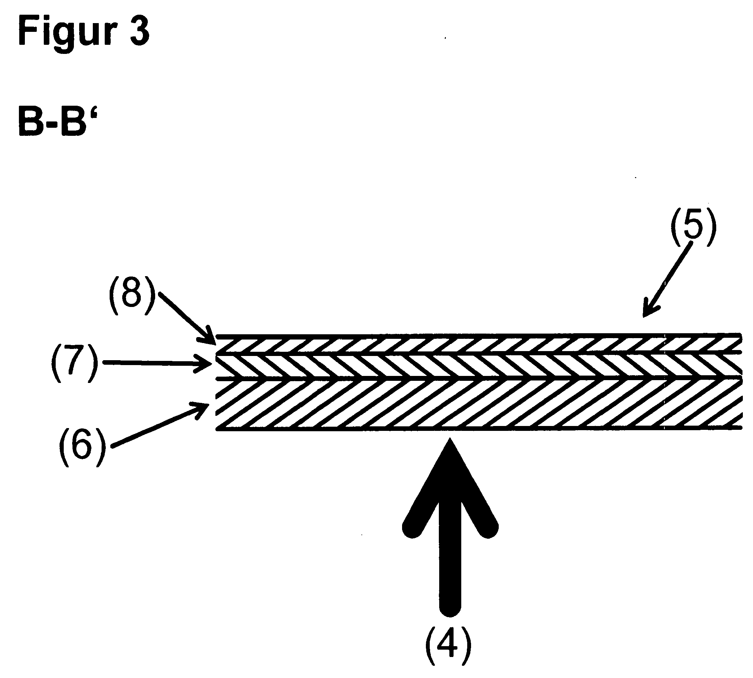

Die Oberlage 2 und die Unterlage 3 werden erfindungsgemäß aus mehrschichtigen Filtermaterialien 5 gebildet, wobei diese von der Anströmseite 4 gesehen erfindungsgemäß den in der Figur 3 gezeigten prinzipiellen Aufbau haben:

➢ Grobfilterlage 6 bestehend aus einem nach einem Trockenverfahren oder einem Extrusionsverfahren hergestellten Vliesstoff aus biologisch abbaubaren Fasern oder Filamenten

➢ Feinfilterlage 7 gebildet aus einem Extrusionsvliesstoff, hergestellt aus einem biologisch abbaubaren, thermoplastischen Granulat.

➢ Stützlage 8 gebildet aus einem Extrusionsvliesstoff, hergestellt aus einem biologisch abbaubaren, thermoplastischen Granulat.

Dabei können die genannten Ober- und Unterlagen 2 und 3 in sich auch aus Kombinationen weiterer Einzellagen oder Flächengewichte zur Erreichung der gewünschten Filtereffizienz bestehen. Ferner können die Oberlage 2 und die Unterlage 3 auch unterschiedliche Flächengewichtsanteile der Grob- und Feinfilterlagen 6 und 7, sowie der Stützlage 8 aufweisen. In einer weiteren Ausführungsform können die Lagen 6 und 7 auch in sich aus Kombinationen mehrerer Lagen bestehen. Beispielsweise kann die Feinfilterlage 7 aus mehreren, übereinander geschichteten Extrusionsvliesstoffen bestehen.

Diese Lagen werden miteinander verbunden. Dies kann beispielsweise mittels biologisch abbaubaren Klebstoffen, aber auch mechanisch und / oder thermisch geschehen.

In einer bevorzugten Form werden die einzelnen Lagen 6, 7 und 8 miteinander thermisch ohne den Zusatz weiterer Klebstoffe an definierten Punkten und/oder Linien miteinander verschweißt, sodass der so entstandene, mehrlagige Aufbau das Basismaterial für die Oberlage 2 oder die Unterlage 3 bei der Herstellung der erfindungsgemäßen Staubfilterbeutels 1 dient.

Im Detail bestehen die Oberlage 2 und die Unterlage 3 in einem erfindungsgemäßen Staubfilterbeutel 1 aus folgenden Materialien:

Grobfilterlage 6: diese besteht erfindungsgemäß aus biologisch abbaubaren Fasern oder Filamenten, welche die Basis eines nach einem Trockenverfahren oder einem Extrusionsverfahren hergestellten Vliesstoffes bilden.

Kommen in einem Trockenverfahren Stapelfasern zum Einsatz, sind diese aus der Gruppe der biologisch abbaubaren Chemiefasern, beispielsweise auf Basis Cellulose, PMS oder Polybernsteinsäure, im folgenden PBS, gewählt. Hersteller derartiger Fasern sind beispielsweise Lenzing für Cellulose-basierende und Fiber Innovation Technology, Cargill Dow oder Unitika für PMS-basierende Typen.

Ist die Grobfilterlage 6 aus einem Extrusionsvliesstoff, werden für die Herstellung der Filamente bevorzugt biologisch abbaubare Granulate auf Basis von PMS eingesetzt.

Stellvertretend für andere, geeignete Herstellverfahren wird nachstehend die Herstellung der Grobfilterlage 6 anhand des Kardierverfahrens beschrieben. Das Kardier-Verfahren ist in dem Buch "Vliesstoffe", Verlag Wiley VCH, 2000 prinzipiell beschrieben.

Neben dem Aufbau aus rein thermoplastischen, biologisch abbaubaren Fasern, beispielsweise auf PMS-Basis kommt in einer bevorzugten Ausführungsform eine Mischung aus biologisch abbaubaren, thermoplastischen Fasern, beispielsweise PMS, mit biologisch abbaubaren, nicht thermoplastischen Fasern, beispielsweise auf Cellulose-Basis, zur Anwendung. Die zugrundeliegenden Stapelfasern haben einen Fasertiter im Bereich von 0,9 bis 6,7dtex und eine Stapellänge zwischen 25 und 60mm.

Ein so hergestellter, zunächst unverfestigter Faserflor wird anschließend mechanisch mittels Vernadelung verfestigt. Je nach dem für die Filtereffizienz notwendigen Flächengewicht geschieht diese Vernadelung im Gewichtsbereich von 30 bis 100 g/qm vorzugsweise mittels Wasserstahlen, darüber üblicherweise mittels klassischer Nadeltechnologie.

Der Anteil an biologisch abbaubaren, thermoplastischen Stapelfasern ist, sollte klebstofffrei mittels thermischer Verbindung gearbeitet werden, für die spätere Verschweißung der Einzellagen 6, 7 und 8 zur Bildung der Oberlage 2 oder Unterlage 3 notwendig.

Des Weiteren wird durch den Anteil der thermoplastischen, biologisch abbaubaren Fasern auch die Verschweißbarkeit der Oberlage 2 mit der Unterlage 3 gewährleistet. Im erfindungsgemäßen Staubfilterbeutel 1 liegen Oberlage 2 und Unterlage 3 direkt mit der jeweiligen Grobfilterlage 6 aufeinander.

Die biologisch abbaubaren, nicht-thermoplastischen Stapelfasern der Grobfilterlage 6 sind Cellulosefasern wie Viskose oder Lyocell. Erfindungsgemäß enthält die Grobfilterlage 6 zwischen 70 bis 0 Gewichts% dieser biologisch abbaubaren Stapelfasern.

Die biologisch abbaubaren, thermoplastischen Fasern setzen sich aus Polymeren wie beispielsweise PMS oder PBS zusammen. Erfindungsgemäß enthält die Grobfilterlage 6 zwischen 30 bis 100 Gewichts% dieser Fasern. In einer bevorzugten Ausführungsform kommen PMS-Fasern zum Einsatz.

Die Flächengewichte der Grobfilterlage 6 liegen je nach Anforderung an die Effizienz der Vorfiltration zwischen 20g/qm und 150 g/qm, bevorzugt im Bereich von 40-85 g/qm (gemessen nach EN29073-1) bei einer Dicke von 0,1 - 4mm (gemessen nach EN-ISO 9073-2 mit einer Vorlast von 0,5kPa).

Die Feinfilterlage 7 besteht erfindungsgemäß aus einem Vliesstoff, der mittels eines Extrusionsverfahrens auf dem Weg der Faserformung hergestellt wird. Neben anderen geeigneten Verfahren kommt dabei in einer bevorzugten Ausführungsform das Schmelzblasverfahren zum Einsatz. Die Faserfeinheiten liegen im Mittel bei 2-5 $\mu$m, mit einem Maximum von 9$\mu$m. Das Flächengewicht liegt im Bereich von 10 bis 70 g/qm, bevorzugt im Bereich von 15-45 g/qm. Ebenfalls bevorzugt ist ein Granulat auf Basis von PMS.

Die Stützlage 8 besteht aus einem Extrusionsvliesstoff, der auf dem Weg der Fadenformung hergestellt wird. Bevorzugt wird dabei das Spinnvliesverfahren. Das Flächengewicht liegt im Bereich von 15 bis 70 g/qm, bevorzugt im Bereich von 20-40 g/qm. Ebenfalls bevorzugt ist ein Granulat auf Basis von PMS.

Für die nachstehenden Vergleiche wurde ein erfindungsgemäßer Staubfilterbeutel 1 aus den folgenden Ausgangsmaterialien hergestellt:

Die Grobfilterlage 6 wurde mittels eines Kardierverfahrens und anschließender Wasserstrahlverfestigung in einem Flächengewicht von ca. 50 g/qm und einer Mischung von 70% PMS-Faser Ingeo 1,7dtex, 38mm Stapellänge und 30% Lenzing Viscose 1,7dtex / 40mm hergestellt, beispielsweise auf eine Breite von 31cm geschnitten und aufgerollt. Die resultierende Grobfilterschicht 6 hat eine Dicke von ca. 0,35mm, gemessen nach EN-ISO 9073-2 mit einer Vorlast von 0,5kPa.

Auf ein die spätere Stützlage 8 bildendes PMS-Spinnvlies, Typ Voltex PLA-Spinnvlies mit einem Flächengewicht von 40 g/qm, wird ein aus PMS-Granulat, Typ Nature Works 6251 bestehendes, schmelzgeblasenes Vlies mit ca. 40 g/qm und einer mittleren Faserfeinheit von im Mittel 3.1 $\mu$m abgelegt, danach auf eine Breite von beispielsweise 31cm geschnitten und aufgerollt. Dieses schmelzgeblasene Vlies bildet im fertigen Aufbau die Feinfilterlage 7.

Die Grobfilterlage 6 und die lose aufeinander liegenden Feinfilterlage 7 und Stützlage 8 werden nun thermisch mittels eines beheizten Kalanders bei einer Temperatur von ca. 120°C miteinander an mustermäßig verteilten, definierten Stellen verbunden.

Es ist auch eine Verschweißung der Lagen 6 bis 8 erst im Zuge der Herstellung des erfindungsgemäßen Filterbeutels 1 denkbar. Alternativ zu einem beheizten Kalander ist auch eine Ultraschallverschweißung machbar.

Für das Ausführungsbeispiel wurden für die Oberlage 2 und Unterlage 3 im erfindungsgemäßen Staubfilterbeutel 1 jeweils die gleichen Aufbauten eingesetzt.

Nach dem Ausstanzen der Staubeinlassöffnung und dem optionalen Anbringen eines Anschlussstückes an der Oberlage 2 wird diese mit der Unterlage 3 zusammengeführt und entlang der Ränder mittels Ultraschall oder einem anderen geeigneten, thermischen Verfahren verschweißt, sodass ein nahezu quadratischer Beutel der Größe von ca. 30*30 cm mit oben liegender Staubeinlassöffnung resultiert.

Vergleichsmessungen:

Aus dem vorstehend beschriebenen, erfindungsgemäßen Staubfilterbeutel 1 und aus dem Stand der Technik entsprechenden Staubfilterbeuteln wurden Muster entnommen und auf Parameter Luftdurchlässigkeit, Dicke, Nassfestigkeit und Festigkeitsverlust nach Kompostierung hin untersucht.

Zum Vergleich wurden folgende Materialien herangezogen:

Vergleichsbeispiel 1: Staubfilterbeutel aus Papier entsprechend der DE102006 051117

Vergleichsbeispiel 2: Staubfilterbeutel, bei dem die Oberlage und die Unterlage aus 100% synthetischen, thermoplastischen Polymeren nach Art der DE 102 21 694 bestehen. Ober- und Unterlage setzen sich dabei aus einem 35 g/qm Spinnvlies als Stützlage, einem Feinfilter aus einem 41g/qm PP-Meltblown und einem Grobfilter aus einem 60g/qm PET-Stapelfaser-Nadelvlies zusammen.

**Man kann erkennen, dass sich** die Materialien des Vergleichsbeispieles 1 zu 100% **abbauen,** allerdings verlieren die Beutel nach dem Vergleichsbeispiel 1 auch sehr schnell an Festigkeit, wenn beim Aufsaugen Wasser in den Filterbeutel kommt. Beim Vergleichsbeispiel 2 ist dieses Verhalten nicht gegeben, d.h. der Beutel verliert keinerlei Festigkeit, wenn er mit Wasser in Berührung kommt. Jedoch zeigt sich beim Kompostiertest erwartungsgemäß ein nur sehr geringer Festigkeitsverlusts, der hauptsächlich auf eine mechanische Schädigung der Messstreifen während der Behandlung zurückzuführen ist.

Der erfindungsgemäß hergestellte Staubfilterbeutel 1 zeigt keine Beeinträchtigung der Festigkeit, wenn er Feuchtigkeit ausgesetzt ist. Des Weiteren werden die Ausgangsmaterialien während des Kompostiervorganges so stark biologisch abgebaut, dass nach der Behandlungszeit nur noch ca. 33% der Ausgangsfestigkeit vorhanden sind.

Bezugszeichenliste:

1 - Staubfilterbeutel
2 - Oberlage
3 - Unterlage
4 - Anströmseite
5 - Filtermaterial
6 - Grobfilterlage
4 - Feinfilterlage
8 - Stützlage

**Patentansprüche**

1. Staubfilterbeutel (1), umfassend eine Oberlage (2) und eine Unterlage (3), welche jeweils aus einem mehrschichtigen Filtermaterial (5) gebildet sind, das aus mindestens einer aus biologisch abbaubaren Fasern bestehenden, aus Vliesstoff gebildeten Grobfilterlage (6), mindestens einer aus Vliesstoff gebildeten Feinfilterlage (7) und mindestens einer aus Vliesstoff gebildeten Stützlage (8) besteht und die einzelnen Lagen (6), (7) und (8) an definierten Stellen miteinander verbunden sind,
**dadurch gekennzeichnet,**

**dass** mindestens 30% der die Grobfilterlage (6) bildenden biologisch abbaubaren Fasern **oder** Filamente thermoplastische Eigenschaften aufweisen,
**dass** die Feinfilterlage (7) aus **biologisch abbaubaren, thermoplastischen Filamenten** besteht und
**dass** die Stützlage (8) aus **biologisch abbaubaren, thermoplastischen Filamenten** besteht.

2. Staubfilterbeutel (1) nach Anspruch 1,
**dadurch gekennzeichnet,**
**dass** die biologisch abbaubaren Fasern und / oder Filamente aus natürlichen Polymeren aufgebaut sind

3. Staubfilterbeutel (1) nach einem der vorhergehenden Ansprüche,
**dadurch gekennzeichnet,**
**dass** die natürlichen Polymere auf der Basis von Stärke gebildet sind

4. Staubfilterbeutel (1) nach einem der vorhergehenden Ansprüche,,
**dadurch gekennzeichnet,**
**dass** die biologisch abbaubaren, thermoplastischen Fasern und / oder Filamente auf Basis von Stärke aus Polymilchsäure bestehen.

5. Staubfilterbeutel (1) nach einem der vorhergehenden Ansprüche,,
**dadurch gekennzeichnet,**
**dass** die biologisch abbaubaren, thermoplastischen Fasern und / oder Filamente auf Basis von Stärke aus Polybernsteinsäure bestehen.

6. Staubfilterbeutel (1) nach einem der vorhergehenden Ansprüche,
**dadurch gekennzeichnet,**
**dass** die Grobfilterlage (6) aus Fasern oder Filamenten auf Basis von Stärke besteht.

7. Staubfilterbeutel (1) nach einem der vorhergehenden Ansprüche,
**dadurch gekennzeichnet,**
**dass** die Grobfilterlage (6) aus einer Mischung von Fasern oder Filamenten auf Basis Stärke mit Fasern auf Basis Cellulose besteht.

8. Staubfilterbeutel (1) nach einem der vorhergehenden Ansprüche,
**dadurch gekennzeichnet,**
**dass** die Grobfilterlage (6) nach einem Trockenverfahren oder nach einem Extrusionsverfahren hergestellt wird.

9. Staubfilterbeutel (1) nach einem der vorhergehenden Ansprüche,
**dadurch gekennzeichnet,**
**dass** die Feinfilterlage (7) aus einem **biologisch abbaubaren, thermoplastischen** Extrusionsvliesstoff besteht.

10. Staubfilterbeutel (1) nach einem der vorhergehenden Ansprüche,
**dadurch gekennzeichnet,**
**dass** die Feinfilterlage (7) aus natürlichen Polymeren auf der Basis von Stärke gebildet wird

11. Staubfilterbeutel (1) nach einem der vorhergehenden Ansprüche,
**dadurch gekennzeichnet,**
**dass** die biologisch abbaubaren, thermoplastischen **Filamente der Feinfilterlage** (7) aus Polymilchsäure bestehen.

12. Staubfilterbeutel (1) nach einem der vorhergehenden Ansprüche,
**dadurch gekennzeichnet,**
**dass** die biologisch abbaubaren, **thermoplastischen Filamente der Feinfilterlage (7)** aus Polybernsteinsäure bestehen.

13. Staubfilterbeutel (1) nach einem der vorhergehenden Ansprüche,
**dadurch gekennzeichnet,**
**dass** die Stützlage (8) aus einem biologisch abbaubaren Extrusionsvliesstoff besteht.

14. Staubfilterbeutel (1) nach einem der vorhergehenden Ansprüche,

**dadurch gekennzeichnet,**
**dass** die Stützlage (8) aus natürlichen Polymeren auf der Basis von Stärke gebildet wird

15. Staubfilterbeutel (1) nach einem der vorhergehenden Ansprüche,
**dadurch gekennzeichnet,**
**dass** die biologisch abbaubaren, thermoplastischen **Filamente der Stützlage (8)** aus Polymilchsäure bestehen.

16. Staubfilterbeutel (1) nach einem der vorhergehenden Ansprüche,
**dadurch gekennzeichnet,**
**dass** die biologisch abbaubaren, thermoplastischen **Filamente der Stützlage (8)** aus Polybernsteinsäure bestehen.

17. Staubfilterbeutel (1) nach einem der vorhergehenden Ansprüche,
**dadurch gekennzeichnet,**
**dass** die Grobfilterlage (6) und die Feinfilterlage (7) und die Stützlage (8) klebstofffrei miteinander verbunden sind.

18. Staubfilterbeutel (1) nach einem der vorhergehenden Ansprüche,
**dadurch gekennzeichnet,**
**dass** die Grobfilterlage (6) und die Feinfilterlage (7) und die Stützlage (8) durch thermisches Verschweißen miteinander verbunden sind.

19. Staubfilterbeutel (1) nach einem der vorhergehenden Ansprüche,
**dadurch gekennzeichnet,**
**dass** die Grobfilterlage (6) und die Feinfilterlage (7) und die Stützlage (8) in Form von definierter Schweißpunktanordnung und / oder definierter Schweißlinienanordnung miteinander verbunden sind.

20. Staubfilterbeutel (1) nach einem der Ansprüche 1 bis 17,
**dadurch gekennzeichnet,**
**dass** die Grobfilterlage (6) und die Feinfilterlage (7) und die Stützlage (8) durch hydrodynamisches Vernadeln miteinander verbunden sind.

21. Staubfilterbeutel (1) nach einem der vorhergehenden Ansprüche,
**dadurch gekennzeichnet,**
**dass** die Feinfilterlage (7) ein Flächengewicht zwischen 10 und 70 g/qm hat

22. Staubfilterbeutel (1) nach einem der vorhergehenden Ansprüche,
**dadurch gekennzeichnet,**
**dass** die Grobfilterlage (6) ein Flächengewicht zwischen 20 und 150 g/qm hat

23. Staubfilterbeutel (1) nach einem der vorhergehenden Ansprüche,
**dadurch gekennzeichnet,**
**dass** die Stützlage (8) ein Flächengewicht zwischen 15 und 70 g/qm hat

24. Staubfilterbeutel (1) nach einem der vorhergehenden Ansprüche,
**dadurch gekennzeichnet,**
**dass** die Oberlage (2) mit der Unterlage (3) klebstofffrei verbunden ist.

25. Staubfilterbeutel (1) nach einem der vorhergehenden Ansprüche,
**dadurch gekennzeichnet,**
**dass** die Oberlage (2) mit der Unterlage (3) durch thermisches Verschweißen verbunden ist.

**Claims**

1. A dust filter bag (1) comprising a top sheet (2) and a base sheet (3), which each consist of a multi-layered filter material (5) formed from at least one coarse filter layer (6) consisting of biodegradable fibres and formed from nonwoven fabric, at least one fine filter layer (7) formed from nonwoven fabric and at least one support layer (8) formed from nonwoven fabric, and the individual layers (6), (7) and (8) are connected to one another at defined locations,

**characterised in that**
at least 30% of the biodegradable fibres or filaments which form the coarse filter layer (6) have thermoplastic properties,
the fine filter layer (7) consists of **biodegradable thermoplastic filaments** and
the support layer (8) consists of **biodegradable thermoplastic filaments.**

2. The dust filter bag (1) according to claim 1,
**characterised in that**
the biodegradable fibres and / or filaments consist of natural polymers.

3. The dust filter bag (1) according to one of the preceding claims,
**characterised in that**
the natural polymers are formed on the basis of starch.

4. The dust filter bag (1) according to one of the preceding claims,
**characterised in that**
the biodegradable thermoplastic fibres and / or filaments on the basis of starch consist of polylactic acid.

5. The dust filter bag (1) according to one of the preceding claims,
**characterised in that**
the biodegradable thermoplastic fibres and / or filaments on the basis of starch consist of polysuccinic acid.

6. The dust filter bag (1) according to one of the preceding claims,
**characterised in that**
the coarse filter layer (6) consists of fibres or filaments on the basis of starch.

7. The dust filter bag (1) according to one of the preceding claims,
**characterised in that**
the coarse filter layer (6) consists of a mixture of fibres or filaments on the basis of starch with fibres based on cellulose.

8. The dust filter bag (1) according to one of the preceding claims,
**characterised in that**
the coarse filter layer (6) is prepared according to a dry process or an extrusion process.

9. The dust filter bag (1) according to one of the preceding claims,
**characterised in that**
the fine filter layer (7) consists of a **biodegradable thermoplastic** nonwoven extrusion fabric.

10. The dust filter bag (1) according to one of the preceding claims,
**characterised in that**
the fine filter layer (7) is formed from natural polymers on the basis of starch.

11. The dust filter bag (1) according to one of the preceding claims,
**characterised in that**
the biodegradable thermoplastic **filaments of the fine filter layer** (7) are made of polylactic acid.

12. The dust filter bag (1) according to one of the preceding claims,
**characterised in that**
the biodegradable **thermoplastic filaments of the fine filter layer** (7) are made of polysuccinic acid.

13. The dust filter bag (1) according to one of the preceding claims,
**characterised in that**
the support layer (8) consists of a biodegradable nonwoven extrusion fabric.

14. The dust filter bag (1) according to one of the preceding claims,
**characterised in that**
the support layer (8) consists of natural polymers on the basis of starch.

**15.** The dust filter bag (1) according to one of the preceding claims,
**characterised in that**
the biodegradable thermoplastic **filaments of the support layer (8)** consist of polylactic acid.

**16.** The dust filter bag (1) according to one of the preceding claims,
**characterised in that**
the biodegradable thermoplastic **filaments of the support layer (8)** consist of polysuccinic acid.

**17.** The dust filter bag (1) according to one of the preceding claims,
**characterised in that**
the coarse filter layer (6) and the fine filter layer (7) and the support layer (8) are connected to each other without the use of adhesive.

**18.** The dust filter bag (1) according to one of the preceding claims,
**characterised in that**
the coarse filter layer (6) and the fine filter layer (7) and the support layer (8) are connected to each other by means of thermal bonding.

**19.** The dust filter bag (1) according to one of the preceding claims,
**characterised in that**
the coarse filter layer (6) and the fine filter layer (7) and the support layer (8) are connected to each other in the form of a defined spot weld arrangement and / or defined weld line arrangement.

**20.** The dust filter bag (1) according to one of the claims 1 to 17,
**characterised in that**
the coarse filter layer (6) and the fine filter layer (7) and the support layer (8) are connected to each other by means of hydrodynamic needling.

**21.** The dust filter bag (1) according to one of the preceding claims,
**characterised in that**
the fine filter layer (7) has a weight per unit area between 10 and 70 g/m$^2$.

**22.** The dust filter bag (1) according to one of the preceding claims,
**characterised in that**
the coarse filter layer (6) has a weight per unit area between 20 and 150 g/m$^2$.

**23.** The dust filter bag (1) according to one of the preceding claims,
**characterised in that**
the support layer (8) has a weight per unit area between 15 and 70 g/m$^2$.

**24.** The dust filter bag (1) according to one of the preceding claims,
**characterised in that**
the top sheet (2) is connected to the base sheet (3) without the use of adhesive.

**25.** The dust filter bag (1) according to one of the preceding claims,
**characterised in that**
the top sheet (2) is connected to the base sheet (3) by means of thermal bonding.

**Revendications**

**1.** Sac à poussière filtrant (1), comprenant une couche supérieure (2) et une couche inférieure (3), lesquelles sont chacune formées d'un matériau filtrant multicouches (5), qui est constitué d'au moins une couche filtrante grossière (6), constituée de fibres biologiquement dégradables, formée d'un non-tissé, d'au moins une couche filtrante fine (7) formée d'un non-tissé et d'au moins une couche support (8) formée d'un non-tissé, les couches individuelles (6), (7) et (8), étant reliées entre elles à des endroits définis,
**caractérisé en ce**
**qu'**au moins 30 % des fibres biologiquement dégradables ou filaments formant la couche filtrante grossière (6) présentent des propriétés thermoplastiques,
**que** la couche filtrante fine (7) est constituée de **filaments thermoplastiques biologiquement dégradables** et
**que** la couche support (8) est constituée de **filaments thermoplastiques biologiquement dégradables.**

**2.** Sac à poussière filtrant (1) selon la revendication 1,
**caractérisé en ce**
**que** les fibres et/ou filaments biologiquement dégradables sont à base de polymères naturels.

**3.** Sac à poussière filtrant (1) selon l'une quelconque des revendications précédentes,
**caractérisé en ce**
**que** les polymères naturels sont à base d'amidon.

**4.** Sac à poussière filtrant (1) selon l'une quelconque des revendications précédentes,
**caractérisé en ce**
**que** les fibres et/ou filaments thermoplastiques, à base d'amidon biologiquement dégradables, sont constituées d'acide polylactique.

**5.** Sac à poussière filtrant (1) selon l'une quelconque des revendications précédentes,
**caractérisé en ce**
**que** les fibres et/ou filaments thermoplastiques, à base d'amidon biologiquement dégradables, sont constituées d'acide poly-succinique.

**6.** Sac à poussière filtrant (1) selon l'une quelconque des revendications précédentes,
**caractérisé en ce**
**que** la couche filtrante grossière (6) est constituée de fibres ou de filaments à base d'amidon.

**7.** Sac à poussière filtrant (1) selon l'une quelconque des revendications précédentes,
**caractérisé en ce**
**que** la couche filtrante grossière (6) est constituée d'un mélange de fibres ou de filaments à base d'amidon et de fibres à base de cellulose.

**8.** Sac à poussière filtrant (1) selon l'une quelconque des revendications précédentes,
**caractérisé en ce**
**que** la couche filtrante grossière (6) est fabriquée selon un procédé à sec ou selon un procédé par extrusion.

**9.** Sac à poussière filtrant (1) selon l'une quelconque des revendications précédentes,
**caractérisé en ce**
**que** la couche filtrante fine (7) est constituée d'un non-tissé d'extrusion **thermoplastique, biologiquement dégradable.**

**10.** Sac à poussière filtrant (1) selon l'une quelconque des revendications précédentes,
**caractérisé en ce**
**que** la couche filtrante fine (7) est formée de polymères naturels à base d'amidon.

**11.** Sac à poussière filtrant (1) selon l'une quelconque des revendications précédentes,
**caractérisé en ce**
**que** les **filaments thermoplastiques,** biologiquement dégradables, **de la couche filtrante fine (7)** sont constitués d'acide polylactique.

**12.** Sac à poussière filtrant (1) selon l'une quelconque des revendications précédentes,
**caractérisé en ce**
**que** les **filaments thermoplastiques,** biologiquement dégradables, **de la couche filtrante fine (7)** sont constitués d'acide poly-succinique.

**13.** Sac à poussière filtrant (1) selon l'une quelconque des revendications précédentes,
**caractérisé en ce**
**que** la couche support (8) est constituée d'un non-tissé d'extrusion biologiquement dégradable.

**14.** Sac à poussière filtrant (1) selon l'une quelconque des revendications précédentes, **caractérisé en ce que** la couche support (8) est formée par des polymères naturels à base d'amidon.

**15.** Sac à poussière filtrant (1) selon l'une quelconque des revendications précédentes, **caractérisé en ce que** les **filaments thermoplastiques,** biologiquement dégradables, **de la couche support (8)** sont constitués d'acide polylactique.

**16.** Sac à poussière filtrant (1) selon l'une quelconque des revendications précédentes, **caractérisé en ce que** les **filaments thermoplastiques,** biologiquement dégradables, **de la couche support (8)** sont constitués d'acide poly-succinique.

**17.** Sac à poussière filtrant (1) selon l'une quelconque des revendications précédentes, **caractérisé en ce que** la couche filtrante grossière (6), et la couche filtrante fine (7) et la couche support (8) sont reliées entre elles sans produit adhésif.

**18.** Sac à poussière filtrant (1) selon l'une quelconque des revendications précédentes, **caractérisé en ce que** la couche filtrante grossière (6), et la couche filtrante fine (7) et la couche support (8) sont reliées entre elles par soudage thermique.

**19.** Sac à poussière filtrant (1) selon l'une quelconque des revendications précédentes, **caractérisé en ce que** la couche filtrante grossière (6), et la couche filtrante fine (7) et la couche support (8) sont reliées entre elles sous la forme d'un agencement défini de points de soudure et/ou d'un agencement défini de lignes de soudure.

**20.** Sac à poussière filtrant (1) selon l'une quelconque des revendications 1 à 17, **caractérisé en ce que** la couche filtrante grossière (6), et la couche filtrante fine (7) et la couche support (8) sont reliées entre elles par aiguilletage hydrodynamique.

**21.** Sac à poussière filtrant (1) selon l'une quelconque des revendications précédentes, **caractérisé en ce que** la couche filtrante fine (7) possède un grammage entre 10 et 70 g/m$^2$.

**22.** Sac à poussière filtrant (1) selon l'une quelconque des revendications précédentes, **caractérisé en ce que** la couche filtrante grossière (6) possède un grammage entre 20 et 150 g/m$^2$.

**23.** Sac à poussière filtrant (1) selon l'une quelconque des revendications précédentes, **caractérisé en ce que** la couche support (8) possède un grammage entre 15 et 70 g/m$^2$.

**24.** Sac à poussière filtrant (1) selon l'une quelconque des revendications précédentes, **caractérisé en ce que** la couche supérieure (2) est reliée avec la couche inférieure (3) sans produit adhésif.

**25.** Sac à poussière filtrant (1) selon l'une quelconque des revendications précédentes, **caractérisé en ce que** la couche supérieure (2) est reliée avec la couche inférieure (3) par soudage thermique.

# Figur 1

A - - - - - - - - - - - - - - - - - A'

(1)

Figur 2

A-A'

Figur 3

B-B'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10221694 A1
- DE 102006051117 B3
- EP 1917895 B1
- DE 102006051117
- DE 10221694

**In der Beschreibung aufgeführte Nicht-Patentliteratur**

- Fasertabelle nach P.-A. Koch, Polylactidfasern. Institut für Textiltechnik, 2004